# EUROPÄISCHE PATENTANMELDUNG

(11) **EP 1 116 436 A2**
(43) Veröffentlichungstag der Anmeldung: **18.07.2001**
(21) Anmeldenummer: 01100227.6
(22) Anmeldetag: 03.01.2001
(51) Int. Cl.: A01K 39/01

(54) **Fütterungsanlage**

(30) Priorität: 10.01.2000 DE 10000681
(71) Anmelder: Stallkamp, Erich, 49413 Dinklage (DE)
(72) Erfinder: Stallkamp, Erich, 49413 Dinklage (DE)
(74) Vertreter: Siekmann, Gunnar, Dipl.-Phys.

(57) **Zusammenfassung**

Eine Fütterungsanlage, insbesondere für Geflügelstallanlagen, mit einem Futterkettenantrieb (1) mit einem von einem Motor (2) angetriebenen Antriebsmittel zum Antrieb einer Futterkette (3) und mit einer Abschalteinrichtung (4) wird dahingehend weiterentwickelt, daß die Abschalteinrichtung (4) besonders zuverlässig verschiedene Arten von Störungen erfassen kann. Hierzu wird ein mechanisch bewegbarer Arm (5) in der Abschalteinrichtung (4) vorgesehen, der im Fall einer Störung verschwenkt wird.

## Beschreibung

Die Erfindung betrifft eine Fütterungsanlage, insbesondere für Geflügelstallanlagen, mit einem Futterkettenantrieb mit einem von einem Motor angetriebenen Antriebsmittel zum Antrieb einer Futterkette und mit einer Abschalteinrichtung.

Bei solchen Fütterungsanlagen ist es bekannt, die Stromaufnahme des Motors zu überwachen und die beispielsweise bei einer Blockade der Fütterungsanlage auftretende Abweichung des aufgenommenen Stroms festzustellen und die Anlage abzuschalten.

Auf diese Weise kommt es zwar zu einer Abschaltung der Fütterungsanlage, jedoch erfolgt diese meist erst, wenn der Fehler schon eine gewisse Zeit bestanden hat und Folgeschäden aufgetreten sind. Manche Störungen können auf diese Weise auch gar nicht erfaßt werden.

Aus der DE 196 17 785 A1 ist eine Anordnung für Spiralförderanlagen bekannt.

Der Erfindung liegt daher die Aufgabe zugrunde, eine Fütterungsanlage der eingangs genannten Art zu schaffen, die bei Störungen die Fütterungsanlage und insbesondere den Motor zuverlässig abschaltet.

Die Lösung dieser Aufgabe erfolgt mit einer Fütterungsanlage mit den Merkmalen des Patentanspruchs 1. Vorteilhafte Weiterbildungen der Erfindung sind in den Unteransprüchen beschrieben.

Nach dem Grundgedanken der Erfindung weist die Abschalteinrichtung einen mechanisch bewegbaren Arm auf. Dadurch wird bei den üblicherweise auftretenden mechanischen Fehlern eine mechanische Detektion ermöglicht, die verschiedene Fehler erfassen kann, und direkt auf das auftretende mechanische Problem reagiert.

Bevorzugt ist der Arm im Betrieb in einer Normalstellung positioniert und ist im Störungsfall aus der Normalstellung heraus bewegbar. Das bedeutet, daß bei Auftreten einer Störung eine derartige mechanische Veränderung auftritt, daß der Arm in eine von der Normalstellung abweichende Stellung bewegt wird und dann in dieser neuen Stellung positioniert ist. Diese Änderung der Stellung bzw. das Verlassen der Normalstellung des Arms veranlassen die Abschalteinrichtung, die Fütterungsanlage und insbesondere den Motor abzuschalten. Bevorzugt ist der Arm aktiv in der Normalstellung gehalten. Dadurch wird ein zuverlässiger Betrieb der Fütterungsanlage sichergestellt, solange keine Störung auftritt. Bevorzugt wird der Arm mit Hilfe einer Feder und eines Anschlags in der Normalstellung gehalten. Dabei zieht die Feder den Arm gegen den Anschlag, so daß der Arm in einer definierten Position gehalten ist. Weiterhin ist bevorzugt eine Einrichtung zur Detektion der Stellung des Arms vorgesehen, die günstigerweise benachbart zu dem in der Normalstellung befindlichen Arm angeordnet ist und insbesondere einen Magnetsensor aufweist, so daß der Magnetsensor einen örtlich korrespondierenden metallischen Teil des Arms, der auch durch eine zusätzlich dort angebrachte Schraube gebildet sein kann, detektiert. Auf diese Weise wird durch einen Magnetsensor überprüft, ob der Arm in der Normalstellung ist, und der bei Entfernung des Arms aus der Normalstellung ein Signal abgeben kann, das den Motor abschaltet. Dazu ist eine Datenverbindung zwischen der Einrichtung zur Detektion der Stellung des Armes und dem Motor vorgesehen. Alternativ kann die Stellung des Arms auch beispielsweise mit Hilfe einer Lichtschranke oder mit Hilfe von anderen elektrischen Sensoren detektiert werden. Beispielsweise kann ein Nährungssensor oder ein induktiver Sensor verwendet werden, der kontrolliert, ob der Arm in einer bestimmten Stellung vorhanden ist. Alternativ kann eine Lichtschranke vorgesehen werden, die prüft, ob der Arm sich aus der Stellung herausbewegt und dabei die Lichtschranke unterbricht.

In einer bevorzugten Ausbildungsform der Erfindung ist der Arm mit einem Hebelelement verbunden, das hinter dem Antrieb im Bereich der Futterkette angeordnet ist. Ein derartiges Hebelelement ist bevorzugt so ausgebildet, daß es in einem geringen Abstand über der hinter dem Motor ablaufenden Kette angeordnet ist. Bei einem Kettenriß würde die Kette durchziehen, so daß sich die Kette hinter dem Motor aufstapelt. Dabei wird das Hebelelement von der sich auftürmenden Kette nach oben gedrückt und bewegt dabei den Arm aus der Normalstellung. Bevorzugt sind der Arm und das Hebelelement um dieselbe Achse schwenkbar und dort miteinander verbunden, so daß das sich nach oben bewegende Hebelelement den Arm am entgegengesetzten Ende nach unten bewegt. Günstigerweise sind der Arm und das Hebelelement einstückig ausgebildet.

In einer anderen bevorzugten Ausführungsform weist der Antrieb ein Futterkettenrad auf, das von dem Motor angetrieben ist, wobei das Futterkettenrad über einen Sicherungsstift mit dem Motor verbunden ist. Bei einer Blockade des Futterkettenrads springt daher der federbelastete Sicherungsstift aus der in dem Futterkettenrad vorgesehenen Ausnehmung heraus, so daß der Motor weiterdreht, wobei der Sicherungsstift mit seinem rückwärtigen Bereich vorsteht. Der Motor dreht dann also mit dem freigegebenen Sicherungsstift weiter. Günstigerweise ist der Arm im Bewegungsweg des Sicherungsstifts, insbesondere des rückwärtigen Bereichs des Sicherungsstifts, angeordnet, so daß der Motor mit dem Sicherungsstift auf den Arm trifft und diesen aus der Normalstellung heraus bewegt. Dadurch wird ein Signal zum Abschalten an den Motor gegeben. Auf diese Weise können also bevorzugt zwei und bei Bedarf noch mehr verschiedene Fehlerquellen mechanisch erkannt werden, so daß eine Abschaltung des Motors ausgelöst wird. Bevorzugt ist außerdem noch eine Signalisierungseinrichtung vorhanden, mit der das Abschalten des Motors einem Überwacher der Anlage, beispielsweise durch einen Signalton oder ein optisches Signal mitgeteilt wird.

Nachfolgend wird die Erfindung anhand eines in der Zeichnung dargestellten bevorzugten Ausführungsbeispiels weiter erläutert. Im einzelnen zeigen die schematischen Darstellungen in
- Fig. 1: eine geschnittene Seitenansicht eines Ausschnitts der erfindungsgemäßen Fütterungsanlage im Bereich des Futterkettenrades mit dem Arm und
- Fig. 2: eine geschnittene Draufsicht auf einen Ausschnitt aus der Fütterungsanlage gemäß der Linie A-A in Fig. 1.

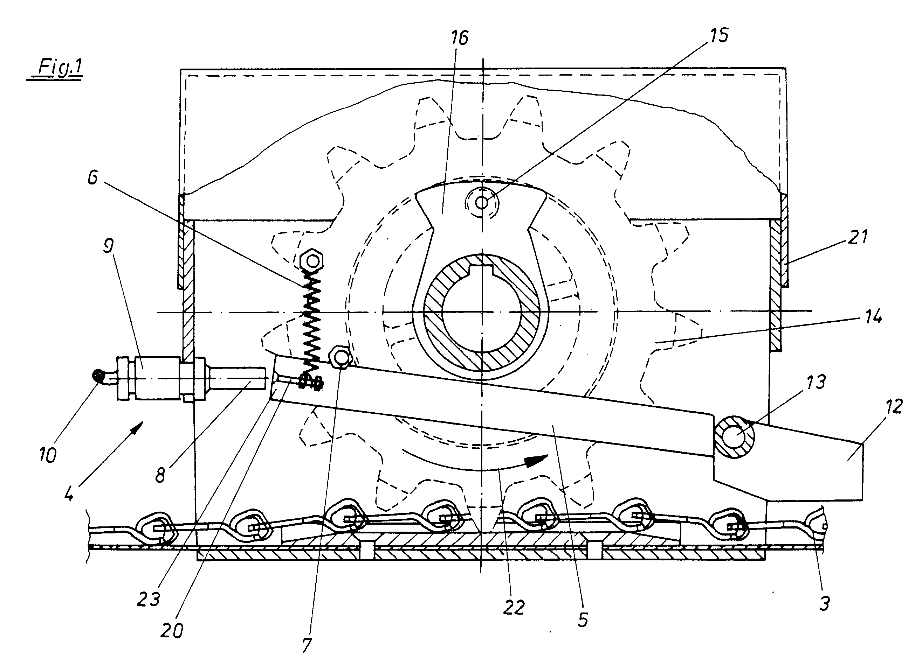

In Fig. 1 ist eine geschnittene Seitenansicht durch eine Konsole 21 eines Futterkettenantriebs einer Fütterungsanlage dargestellt. Dabei treibt ein von einem Motor angetriebenes Futterkettenrad 14 eine Futterkette 3 an, wobei die Drehrichtung mit dem Pfeil 22 angegeben ist. Die Futterkette 3 wird dabei über eine Gleitkufe 17 geführt, auf der das Futterkettenrad 14 mit seinen Zähnen in die Futterkette 3 eingreift und diese transportiert. In der Konsole 21 ist zwischen dem Futterkettenrad 14 und dem übrigen Futterkettenantrieb ein beweglicher Arm 5 angeordnet, der auch als Schaltarm bezeichnet werden kann und zur mechanischen Detektion von Störungen dient. Der Arm 5 wird mit einer Feder 6 nach oben gegen einen Anschlag 7 gezogen und verbleibt in dieser Normalstellung, solange keine Störung auftritt. Im Endbereich des Arms 5 ist eine metallische Schraube vorgesehen, die ein metallisches oder magnetisches Endstück 23 hält. In unmittelbarer Nachbarschaft zu dem Ende des Arms 5 mit dem Endstück 23 ist ein Magnetsensor 8 mit einem daran anschließenden Schalter 9 positioniert, der detektiert, ob der Arm 5 in der Normalstellung ist und bei Verlassen der Normalstellung ein Signal abgibt, so daß der Schalter 9 umschaltet und über eine Kabelverbindung 10 ein Signal weitergibt. Der Arm 5 ist an einer Achse 13 beweglich gelagert, an der auch ein Hebelelement 12 beweglich gelagert ist. Dieses Hebelelement 12 wird im Falle eines Kettenrisses von der sich hinter dem Motor auftürmenden Kette 3 nach oben gedrückt, wodurch der Arm 5 nach unten bewegt wird, so daß der Endbereich 23 des Arms 5 den Nachbarschaftsbereich zu dem Magnetsensor 8 verläßt. Dadurch erfolgt eine Abschaltung des Motors. Das Futterkettenrad 14 wird von dem Motor mit Hilfe eines Mitnehmers 16 und einem darin angeordneten Sicherungsstift 15 angetrieben. Wird das Futterkettenrad 14 blockiert oder die Last zu groß, so springt der federbelastete Sicherungsstift 15 aus der in dem Futterkettenrad vorgesehenen Ausnehmung heraus und dreht dann weiter, wobei der dann nach hinten vorstehende Sicherungsstift 15 von oben auf den Arm 5 trifft und diesen gegen den Druck der Feder 6 nach unten bewegt, wodurch der Magnetsensor 8 ein Signal abgibt und der Motor abgeschaltet wird.

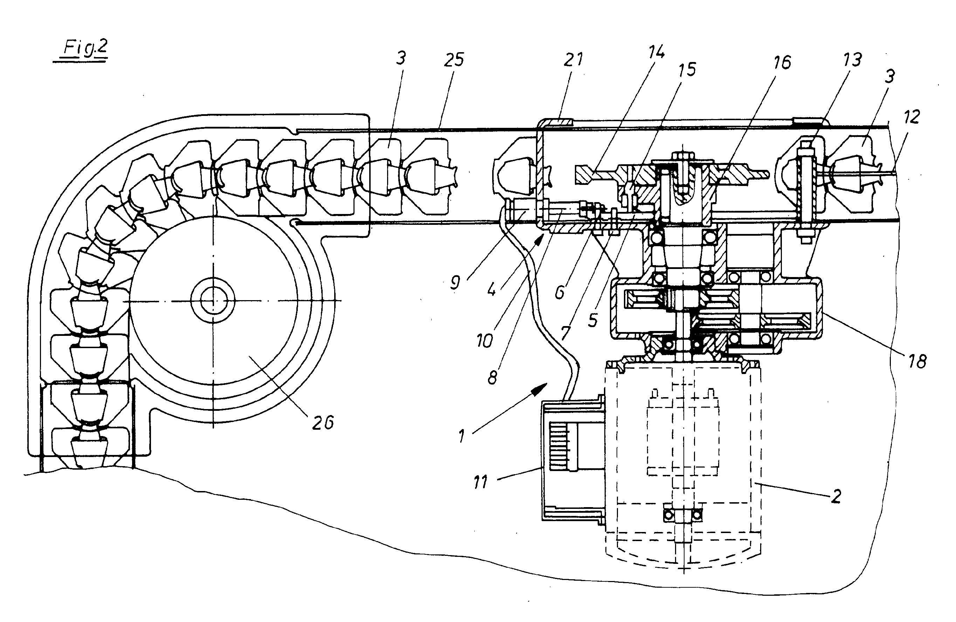

In Fig. 2 ist eine Draufsicht auf den Futterkettenantrieb 1 und die umliegende Fütterungsanlage gemäß der Linie A-A in Fig. 1 dargestellt. Der Futterkettenantrieb 1 weist einen Motor 2, insbesondere einen Elektromotor auf, der über ein Getriebe 18 ein Futterkettenrad 14 antreibt, das in einer Konsole 21 angeordnet ist und dort die Futterkette 3 antreibt. Die Futterkette 3 läuft in einer Rinne 25 und transportiert das Futter in der oben offenen Rinne 25 durch die gesamte Stallanlage. In den Eckbereichen wird die Futterkette 3 mit Hilfe von Eckenrädern 26 umgeleitet, so daß die Kette 3 insgesamt umlaufend ausgebildet ist. Der Futterkettenantrieb 1 weist eine Abschalteinrichtung 4 auf, die wiederum insbesondere den mechanisch bewegbaren Arm 5 aufweist. Dieser ist an der Achse 13 befestigt, an der auch das Hebelelement 12 befestigt ist. Das Hebelelement 12 ist mittig über der Futterkette 3 angeordnet und wird von einer sich auftürmenden Futterkette 3 nach oben gedrückt, so daß der Arm 5, an der Achse 13 mit dem Hebelelement 12 verbunden ist nach unten bewegt wird. Der Arm 5 ist dicht benachbart zur Wand der Konsole 21 positioniert, so daß er nicht im Bewegungsweg des Futterkettenrads 14 liegt und zwischen dem Futterkettenrad 14 und dem Getriebe 18 des Futterkettenantriebs 1 angeordnet ist. An der Konsole 21 sind weiterhin die Feder 6 und der Anschlag 7 befestigt, insbesondere angeschraubt, die den Arm 5 übergreifen. Das Futterkettenrad wird mit Hilfe eines Mitnehmers 16 angetrieben, wobei der Mitnehmer über einen Sicherungsstift 15 mit dem Futterkettenrad 14 verbunden ist. Bei einer Blockade des Futterkettenrads 14 wird der Sicherungsstift 15 gegen den Federdruck nach hinten gedrückt, so daß der Arm 5 dann im Bewegungsweg des Sicherungsstifts 15, insbesondere des hinteren Bereichs des Sicherungsstifts 15 liegt. Der Sicherungsstift 15 drückt dann den Arm 5 nach unten, so daß der Magnetsensor 8 kein Signal mehr erhält und der Schalter 9 entsprechend umschaltet und über die Leitung 10 ein Signal an den Klemmkasten 11 mit integriertem Schaltschütz gegeben wird und der Motor 2 abgeschaltet wird.

## Patentansprüche

1. Fütterungsanlage, insbesondere für Geflügelstallanlagen, mit einem Futterkettenantrieb (1) mit einem von einem Motor (2) angetriebenen Antriebsmittel zum Antrieb einer Futterkette (3) und mit einer Abschalteinrichtung (4),
**dadurch gekennzeichnet,**
daß die Abschalteinrichtung (4) einen mechanisch bewegbaren Arm (5) aufweist.

2. Fütterungsanlage nach Anspruch 1, dadurch gekennzeichnet, daß der Arm (5) im Betrieb in einer Normalstellung positioniert ist und im Störungsfall aus der Normalstellung herausbewegbar ist.

3. Fütterungsanlage nach einem der Ansprüche 1 und 2, dadurch gekennzeichnet, daß der Arm (5) in der Normalstellung gehalten ist.

4. Fütterungsanlage nach einem der vorhergehenden Ansprüche, dadurch gekennzeichnet, daß der Arm (5) mit Hilfe einer Feder (6) und eines Anschlages (7) in der Normalstellung gehalten ist.

5. Fütterungsanlage nach einem der vorhergehenden Ansprüche, dadurch gekennzeichnet, daß eine Einrichtung zur Detektion der Stellung des Armes vorgesehen ist.

6. Fütterungsanlage nach Anspruch 5, dadurch gekennzeichnet, daß die Einrichtung zur Detektion der Stellung des Armes (5) einen Magnetsensor (8) aufweist, und daß der Magnetsensor benachbart zu dem in der Normalstellung befindlichen Arm angeordnet ist.

7. Fütterungsanlage nach einem der vorhergehenden Ansprüche, dadurch gekennzeichnet, daß der Arm (5) mit einem Hebelelement (12) verbunden ist, das hinter dem Antrieb im Bereich der Futterkette (3) angeordnet ist.

8. Fütterungsanlage nach Anspruch 7, dadurch gekennzeichnet, daß das Hebelelement (12) bei einem Kettenriß von der sich auftürmenden Kette (3) nach oben bewegbar ist und den Arm (5) dabei aus der Normalstellung bewegt.

9. Fütterungsanlage nach einem der Ansprüche 7 oder 8, dadurch gekennzeichnet, daß der Arm (5) und das Hebelelement (12) um dieselbe Achse (13) schwenkbar sind.

10. Fütterungsanlage nach einem der vorhergehenden Ansprüche, dadurch gekennzeichnet, daß der Antrieb ein Futterkettenrad (14) aufweist, das von dem Motor (2) angetrieben ist, wobei das Futterkettenrad (14) über einen Sicherungsstift (15) mit dem Motor verbunden ist.

11. Fütterungsanlage nach einem der Ansprüche 9 oder 10, dadurch gekennzeichnet, daß der Arm (5) im Bewegungsweg des Sicherungsstifts (15) angeordnet ist.
